# EUROPEAN PATENT SPECIFICATION

(11) **EP 2 656 043 B1**
(45) Date of publication and mention of the grant of the patent: **17.05.2017**
(21) Application number: 11810830.7
(22) Date of filing: 21.12.2011
(51) Int. Cl.: G01N 1/22, G01N 35/00

(54) **FLUID TRANSFER SYSTEM**
FLÜSSIGKEITSLEITUNGSSYSTEM
SYSTEME DE TRANSFERT DE FLUIDE

(30) Priority: 21.12.2010 EP 10196286
(43) Date of publication of application: 30.10.2013
(73) Proprietor: Sinvent AS, 7465 Trondheim (NO)
(72) Inventor: SLETTA, Havard, N-7465 Trondheim (NO); EINBU, Aslak, N-7465 Trondheim (NO); ZAHLSEN, Kolbjorn, N-7465 Trondheim (NO); WITTGENS, Bernd, N-7465 Trondheim (NO); WINNBERG, Asgeir, N-7465 Trondheim (NO); WIIG, Per Oscar, 7465 Trondheim (NO)
(74) Representative: Gill Jennings & Every LLP
(86) International application number: PCT/EP2011/073557
(87) International publication number: WO 2012/085061

(56) References cited:
- EP-A1- 0 122 248
- EP-A1- 0 470 345
- US-A1- 2009 139 399
- US-B1- 6 295 864

## Description

The present invention relates to fluid analysis, and more specifically, to a fluid transfer system for performing liquid sample analysis by a remote liquid sample analyser.

Analysis of gas emission is essential for monitoring and controlling potential emissions of harmful components in treated gas released to the atmosphere by, for example, large scale CO₂ capture plants, but analysis can be complicated. For example the gas matrix can be complex with a potential high number of analytes, which are often less known components, present in low or very low concentrations. Adding to the challenge, the emitted gas from a flue gas cleaning system (e.g. amine absorbers) is saturated with water and contains aerosols and droplets which contain analytes of interest and further contribute to an even higher total water content of the gas.

The presence of components at very low concentrations in the emitted gas represents a significant challenge for gas emission monitoring. Each flue gas treating system has a different list of components of interest; e.g. each amine solvent system has a number of components of interest, resulting in a large number of possible analytes such as amines and their degradation products. At present, there is no standardised methodology for measurement of most compounds of interest present in emissions from amine based capture plants.

Wet gas containing a large amount of different components present in the sub ppm concentration range represents an unsolved challenge for online gas monitoring; in general, today's online instrumentation for gas analysis fails to meet the demands for extraction of representative samples and the low detection limits required for such cases. Most commercially available instrumentation for online gas analysis, such as online analysers used for taking measurements of trace gas, require a relatively dry gas in order to perform well. A common way of overcoming the problems caused by wet gas is to dry the wet gas prior to analysis. This can be done by cooling the gas in order to condensate out water. However, this leads to water-soluble components being present in the condensate formed, rendering the dry gas analysis incomplete, since analytes of interest are lost in the formed condensate.

The alternative to drying the gas is to heat it well above the dew point in order to avoid condensation of liquid in the analyser. Heating of the sampled gas above the dew point can represent a challenge; heating of the gas samples during extraction and analysis can potentially induce chemical changes like artefact formation or degradation in these samples. In addition, commercially available solutions for online sampling and analysis, have substantial limitations regarding the detection and quantification of trace amounts of less known components.

A common methodology for manual gas emission measurements is by discontinuous measurement methods for which a known volume of air is pumped through either a solution of absorbent or through an adsorbent. Solid adsorbents require dry gas for proper function, and are therefore not feasible for the analysis without drying of the gas prior to analysis. Manual gas sampling and analysis by absorption solutions can handle wet gas and the presence of droplets or aerosols. A common method for manual gas sampling is by absorption of gas in an impinger train. In manual gas sampling and analysis, the absorption solutions are sent to chemical analysis after sampling of gas, and the concentrations of different components are calculated from the concentrations in the absorbent solution relative to the gas volume sampled. For the use of adsorbents, the gas is normally dried by cooling prior to sampling on the adsorbent, producing a condensate which contains water-soluble compounds of interest in the sampled gas.

US2009/139399 discloses a fluid transfer system of a remote liquid sample analyser.

Accordingly, there is a need for a liquid analysis system enabling analysis of the condensate formed upon drying the gas. In particular, there is a need for an online, automated system which can detect analytes at low concentrations.

According to the present invention there is provided a fluid transfer system for transferring a liquid sample from a liquid source to a remote liquid sample analyser, the system comprising a capillary that connects the liquid source and the liquid sample analyser, the system arranged such that, in use, liquid flows from the liquid source to the liquid sample analyser via the capillary, wherein the capillary forms a looped circuit between the liquid source and the liquid sample analyser, and the system further comprising means for pumping the liquid sample through the capillary, wherein the volume of the liquid sample transferred in the capillary line is low compared with the volume of liquid in the liquid source.

The capillary may transfer liquid from the liquid source to the liquid sample analyser in one direction only or, alternatively, the capillary may form a looped circuit, returning some or all of the liquid that is transferred to the analyser back to the liquid source.

The fluid transfer system according to the present invention is also referred to herein as a fast-loop', and the two terms are used interchangeably herein. The liquid analyser may be connected to one or more fast-loops.

Preferably, the fast-loop comprises pumping means to pump the liquid sample through the capillary. The use of pumping means enables liquid samples to circulate at relatively high flow-rates through the capillary. A high circulation rate through the capillary enables fast response times. This means that the liquid analyser may be located from less than 10 meters to several 100 meters away from the liquid source, depending upon the required response time.

The use of a capillary enables sampling at relatively low volumes of liquid relative to the liquid source reservoir. This allows for a relatively compact sampling unit, with all heavy system components located remotely.

The use of a long capillary line enables the liquid sample to be transferred to a liquid sample analyser that is located remotely from the liquid source reservoir.Heavy accessories, including liquid and gas pumps, gas flow meters, and the liquid analyser itself can be located remotely from the gas sampler or sampling site. The gas sampling unit therefore has relatively low weight and space requirements. This is advantageous in situations where it is undesirable to locate analytical equipment in the vicinity of the liquid sample source from flue gas sampling.

Preferably, liquid flows continuously from the liquid source to the liquid sample analyser. This allows for continuous, online, analysis of the liquid, avoiding intermittent flow in the system.

The fluid transfer system may comprise a vial or sample valve suitable for injecting samples from the capillary into the analyser. Preferably, the vial is an auto-injector vial to enable automatic sampling. Such vials can easily be made to fit any standard auto-injector tray or fraction collector of automated liquid analysers. Preferably, the auto-injector vial is a flow-through cell which allows continuous liquid flow through it.

The fast-loop can be used in conjunction with various types of equipment for liquid analysis without modifications of the analyser itself, as long as automated sampling means known in the art such as auto-samplers are available. Liquid from the vial can also be automatically sampled in a fraction collector for later analysis by other means or if no analysing equipment is present, to perform off-line analysis.

The liquid sample may be a condensate. The condensate can be generated through a continuously operated condenser. This means that the fast-loop may be used to perform an analysis of any condensate formed upon drying of wet gas. This application is referred herein as a 'cold-trap'. The fast-loop enables online monitoring of the condensate; however the method is also suited for manual sampling and analysis. The cold-trap avoids heating of the gas and thermal decomposition, enabling representative sampling and analysis of high water content, aerosols and droplets. With this application of the fast-loop very low detection limits may be achieved for a complex gas matrix despite a high water content of the gas. Furthermore, when the components of interest are all water-soluble components, this monitoring of condensate could provide a satisfactory analysis of the gas when using an optimized condenser which can remove most of the water.

The analysis of condensate in this application of the fast-loop has the potential for very low detection limits. This application may use liquid / gas chromatography-mass spectrometry (LC-MS/GC-MS) to identify unknown components, although the set-up allows for a broad range of possible methodology for online or manual liquid analysis. The condensate samples may be analysed using many methods for liquid analysis including derivatization, concentration, toxicity-testing, preparation (cold) or storage of samples.

The system may further comprise a tank located downstream of the liquid sample analyser in the fast-loop, the system being arranged such that, when the system is used, any excess condensate in the system is transferred to the tank via the capillary, thereby controlling the level of condensate in the condenser. With this application, therefore, the fast-loop may be used for performing continuous analysis of the condensate by bleeding off accumulated liquid in the condenser and controlling the liquid level in the condenser.

The condenser may be operated at temperatures below 0° C. Accordingly, the condenser can be operated with any temperature practically achievable in the apparatus. In cases where ice forms in the condenser, liquid samples may be obtained by intermittently melting the ice with, for example, a heating coil mounted on the condenser.

The liquid sample may be an absorption solution. This means that the fast-loop may be used to perform online analysis of any absorption liquid, although the method is also suited for manual sampling and analysis. This application of the fast-loop provides the advantage of avoiding the formation of avoiding heating of the gas prior to analysis, and thus preventing potential chemical changes in the sample due to thermal reactions.

The system may further comprise a tank for collecting waste absorbent from the system located downstream of the liquid analyser and a source of fresh absorbent. The fresh absorbent can be continuously or batchwise fed into the fast-loop, while waste absorbent may be removed from the system such that the residence time of the absorption solution in the liquid source is controlled. Thus, the liquid volume of the impinger may be kept at a constant volume by withdrawing excess liquid to the waste tank. The volume of excess liquid withdrawn may be monitored in the process.

By controlled addition of fresh absorbent and bleeding off used absorbent, the residence time of the absorption solutions can be controlled and in this way the detection limits in the gas analysis can be controlled (longer residence times gives lower detection limits). Longer residence times will in this way provide extremely low detection limits for components present in the gas being sampled. Therefore, with this application of the fast-loop, the analysis of absorption solution may be continuous, automated and online.

The fresh absorbent reservoir and the waste tank and any associated accessories may be located remotely from the impinger, near the analyser.

Condensation of water present in the sampled gas in the impinger can contribute to an increased volume of the absorption solutions with time. In order to have full control on the dilution of the absorption medium, an inert internal standard may be used in the absorption solution. The liquid analyser may continuously monitor the concentration of internal standard in order to adjust for dilution of the medium in the calculations for gas concentrations monitored.

Additionally, the fast-loop analysis principle may be applied to analysis of any liquid samples, such as, for example those from process-reactors.

Examples of systems according to the present invention will now be described with reference to the accompanying drawings, in which:
Figure 1 schematically represents a fluid transfer system or fast-loop according to the present invention;
Figures 2A schematically represents an auto-injector vial which may be used in a system according to the present invention;
Figures 2B and 2C show examples of auto-injector vials;
Figure 3 schematically represents the cold-trap application of the fast-loop;
Figure 4 schematically represents a cold-trap with iso-kinetic gas sampling;
Figure 5 schematically represents an application of the fast-loop to gas analysis by absorption solutions;
Figures 6A to 6C show an online gas sampling unit prototype;
Figure 7 shows concentrations of mono-ethanolamine detected as a function of time using the gas sampling unit prototype.

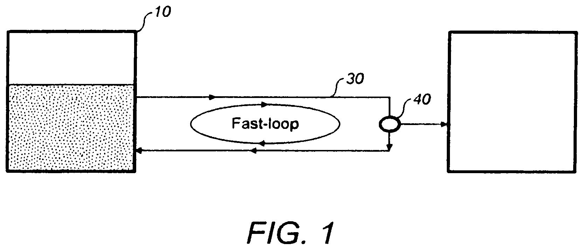

A schematic representation of the fluid transfer system is shown in Figure 1. The liquid to be analysed is contained in a liquid reservoir or liquid source 10. A liquid sample analyser or sample collector 20 is located remotely, from less than 10 meters up to several hundred meters, from the liquid source 10. The analyser 20 may be any analysing unit suitable for liquid analysis such as liquid chromatography-mass spectrometry (LC-MS). The analyser 20 may be automated to perform online analysis of the liquid.

Liquid samples flow from the source 10 to the analyser 20 through a long capillary line 30 connecting the source 10 and the analyser 20. Liquid may flow through the capillary 30 under the influence of gravitational force or against gravitational force, by capillary action. The system may comprise pumping means (not shown) to pump the liquid sample through the capillary 30.

The capillary 30 may transfer liquid from the source 10 to the analyser 20 in one direction only or, alternatively, the capillary 10 may form a looped circuit as shown in Figure 1, returning some or all of the liquid that is transferred to the analyser 20 back to the liquid source 10.

The fast-loop may be provided with a sampling vial 40. Any vial 40 suitable for injecting samples from the capillary 30 into the analyser 20 may be used, although an auto-injector vial is preferred to enable automatic sampling. Preferably, the auto-injector vial is a flow-through cell which allows continuous liquid flow through it.

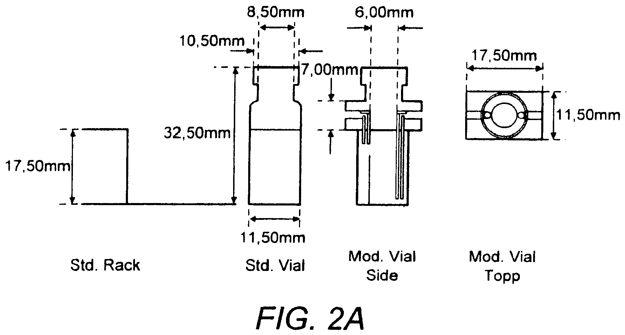

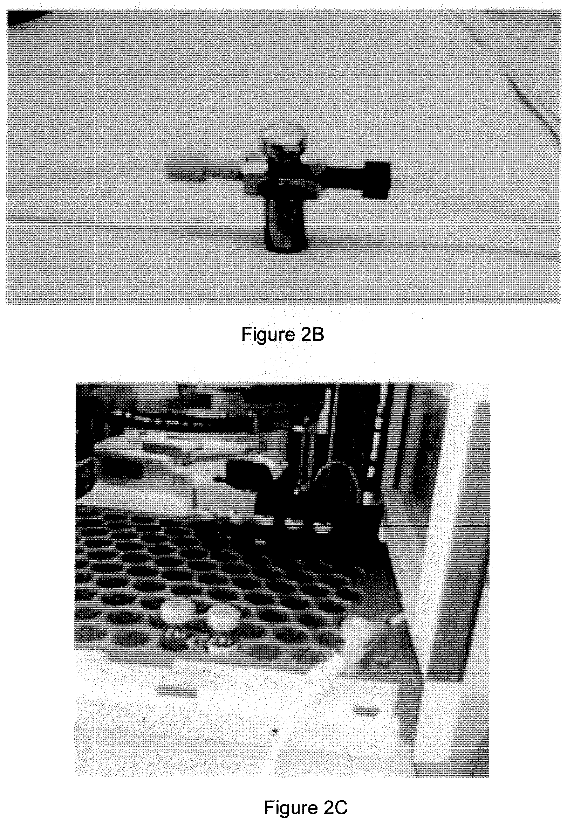

Figure 2A is a schematic representation of an auto-injector vial 40 which may form part of the fast-loop according to the invention. The vial may have the size of a standard auto-injector vial. Liquid may be sampled by the vial using a needle penetrating the top lid as performed in a standard auto injector vial. If the vial is a flow-through cell, all the liquid flowing in the fast-loop passes through the vial. The vial can be made to fit any standard auto-injector tray, as shown in Figure 2C, or fraction collector of automated liquid analysers.

The fast-loop can be used in conjunction with various types of equipment for liquid analysis without modifications of the analyser 20 itself, as long as automated sampling means known in the art such as auto-samplers are available. Liquid from the vial 40 can also be automatically sampled in a fraction collector for later analysis by other means or if no analysing equipment is present, to perform off-line analysis. It would be appreciated that the fast-loop analysis may be applied to analysis of any liquid samples, such as, for example those from process-reactors. A particular useful application of liquid analysis with a fast-loop is analysis of a condensate formed upon drying of wet gas, preferably online.

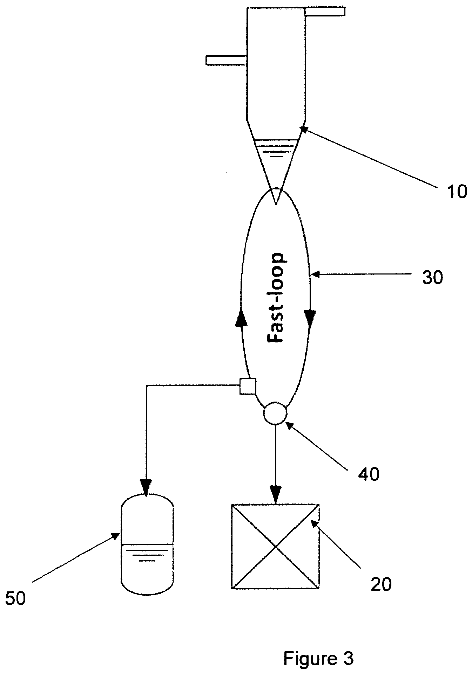

Figure 3 shows schematically represents a gas analysis application using a fast-loop also referred herewith as a cold-trap. In this application, the liquid source 10 is a condenser. Wet gas flows into the condenser 10 where it is cooled and condensates. The formed condensate is collected at the bottom of the condenser while the dry gas flows out of the condenser to a dry gas analyser (not shown).

Liquid samples from the condensate are analysed using the fast-loop as described in Figure 1. Preferably, the cold-trap is automated such that the analysis is performed online.

The condenser can be operated with any temperature practically achievable in the apparatus, including temperatures below 0° C. Liquid sampling from cases with formation of ice in the condenser can be performed by melting the ice. Preferably, melting the ice may be done intermittently, with any suitable means, such as, for example, a heating coil mounted on the condenser.

The cold-trap may further comprise a tank 50 located downstream of the liquid sample analyser 20. When the system is used, any excess condensate in the system is transferred to the tank 50 via the capillary 30, thereby controlling the level of condensate in the condenser 10. With this application, therefore, the fast-loop may be used for performing continuous analysis of the condensate by bleeding off accumulated liquid in the condenser 10 and controlling the liquid level in the condenser 10.

The tank 50 and any associated accessories may be located remotely from the condenser 10, near the analyser 20. In the embodiment shown in Figure 3, the capillary 30 forms a looped circuit and the liquid is returned to the condenser 10. Alternatively, the fast-loop may be arranged to achieve a continuous bleed of one-way liquid to the analyser (embodiment not shown).

The analysis of water-soluble components present in the wet gas without the presence of any absorption media allows for more techniques for chemical analysis, including derivatization, concentrating, toxicity testing or (cold) preservation of the sample. When the components of interest are all water-soluble components, such monitoring of condensate provides a satisfactory analysis of the gas when using an optimised condenser which can remove most of the water.

The analysis of condensate in this application of the fast-loop has the potential for very low detection limits. This application may use liquid / gas chromatography-mass spectrometry (LC-MS/GC-MS) to identify unknown components, although the set-up allows for a broad range of possible methodology for online or manual liquid analysis.

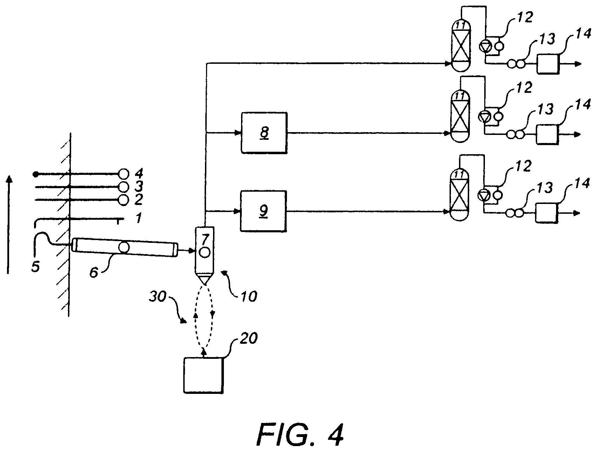

Figure 4 shows another application of the cold-trap described above. The gas to be analysed may be extracted from a pipe via a cooled suction tube 6. A nozzle 5 may be used to control the gas flow as it enters the suction tube 6. The wet gas containing droplets, aerosols and formed condensate flows to a condenser 10. The condenser 10 cools or keeps the gas at the same temperature or sampling point. The dry gas-flow from the condenser 10 is then split downstream the condenser 10 to reach different analysers 8, 9 with different flow requirements in order to perform iso-kinetic measurements.

When sampling hot and moist gas, a two-step cooling starting with the suction tube 6 can prevent the forming of mist which can escape the condenser 10. In addition, a demister downstream the condenser may remove escaping droplets. A practical choice of condenser for this purpose could be a standard peltier-cooled dryer with automated condensate collection.

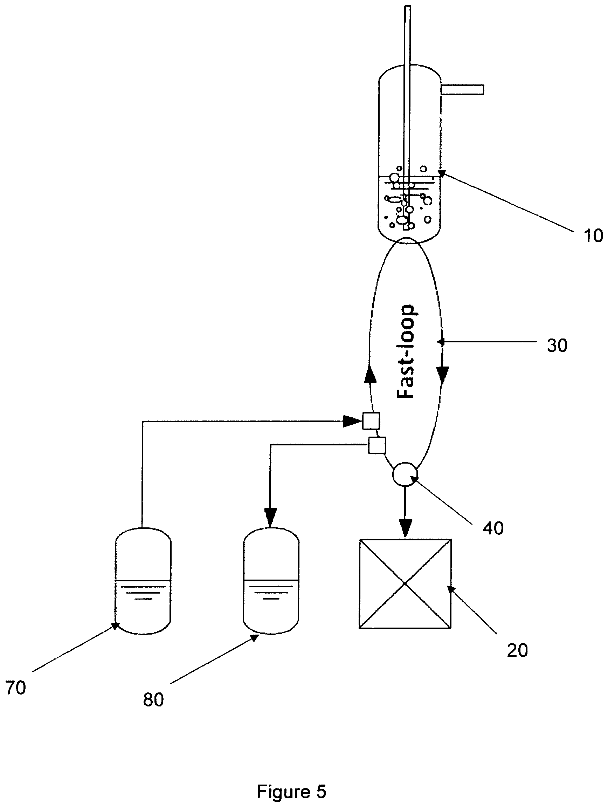

The liquid in a fluid transfer system according to the present invention may be an absorption solution. Figure 5 shows an application of the fast-loop to gas analysis by absorption solutions. In this application, the liquid source 10 is a gas sampler or impinger comprising an absorption solution. Liquid samples of the absorption solution are analysed using the fast-loop as described in Figure 1. Fresh absorbent is continuously or batchwise fed into the fast-loop from a fresh absorbent reservoir 70 and the used, or waste absorbent is removed from the system by bleeding it to a waste tank 80. Thus, the liquid volume of the impinger 10 is kept at a constant volume by withdrawing excess liquid to the waste tank 80. The volume of excess liquid withdrawn may be monitored in the process.

The fresh absorbent reservoir and the waste tank 80 and any associated accessories may be located remotely from the impinger 10, near the analyser 20. All other heavy accessories (not shown), including liquid and gas pumps, gas flow meters, and the liquid analyser 20 itself can be located remotely from the gas sampler 10 or sampling site. The gas sampling unit therefore has relatively low weight and space requirements.

Condensation of water present in the sampled gas in the impinger 10 can contribute to an increased volume of the absorption solutions with time. In order to have full control on the dilution of the absorption medium, an internal standard may be used in the absorption solution. The liquid analyser 20 may continuously monitor the concentration of internal standard in order to adjust for dilution of the medium in the calculations for gas concentrations monitored.

By controlling the input rate of fresh absorbent and bled off waste liquid, the residence time of the liquid in the gas sampler can be controlled. Longer residence times will in this way provide extremely low detection limits for components present in the gas being sampled. Therefore, with this application of the fast-loop, the analysis of absorption solution may be continuous, automated and online.

In order to obtain representatively sampling of droplets and aerosols present in the gas flow sampled independent of particle size of the droplets, the gas can be sampled iso-kinetically, i.e. with the same velocity as the main stream. This can be obtained by adjustment of the gas volume flow sampled from an automatic measurement of gas velocity at the sampling point.

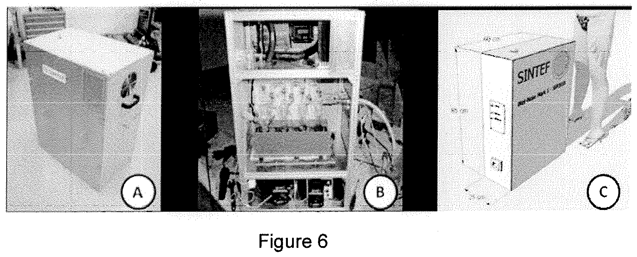

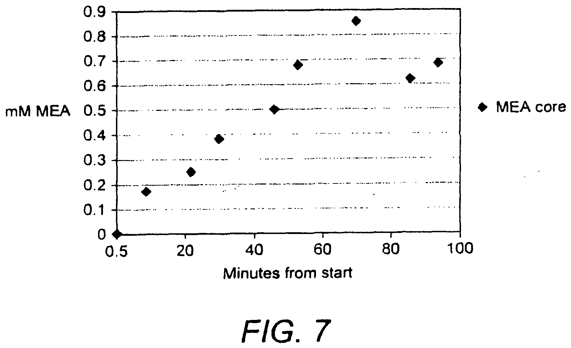

Figures 6A to 6C show a prototype developed for online gas analysis by LC-MS using a fast-loop according to the present invention. Experiments have been carried out using this prototype. The experiments have shown that the remotely located LC-MS analyser was able to detect the low concentration of mono-ethanolamine (MEA) present in the gas coming out of the absorber column with a few minutes response time. Figure 7 shows detected concentrations of MEA as a function of time.

It must be noted that no attempt was made to optimise the response time by increasing the flow of the fast-loop or tuning the setup of gas sampling unit during the experiments. It will be appreciated that, by applying longer residence times of the continuous absorption solution in the impinger, extremely low detection limits can be achieved, even in gases with high water content and with aerosols and droplets.

## Claims

1. A fluid transfer system for transferring a liquid sample from a liquid source (10) to a remote liquid sample analyser (20), the system comprising a capillary (30) that connects the liquid source and the liquid sample analyser, the system arranged such that, in use, liquid flows from the liquid source to the liquid sample analyser via the capillary, wherein the capillary forms a looped circuit between the liquid source and the liquid sample analyser, and the system further comprising means for pumping the liquid sample through the capillary, wherein the volume of the liquid sample transferred in the capillary line is low compared with the volume of liquid in the liquid source.

2. A system according to claim 1, wherein liquid flows continuously from the liquid source (10) to the liquid sample analyser (20).

3. A system according to any preceding claim, further comprising a vial (40) for sampling of liquid from the capillary (30).

4. A system according to claim 3, wherein the vial (40) is an auto-injector vial.

5. A system according to claim 3 or claim 4, wherein the auto-injector vial (40) is a flow-through cell.

6. A system according to claims 3 to 5, wherein the vial (40) is connected to the liquid sample analyser (20).

7. A system according to claims 3 to 5, wherein the vial (40) is connected to a fraction collector.

8. A system according to any preceding claim, wherein the liquid sample is a condensate and the liquid source (10) is a condenser.

9. A system according to claim 1, (10), further comprising a tank (50) located downstream of the liquid sample analyser (20), the system being arranged such that, in use, excess condensate in the system is transferred to the tank, thereby controlling the level of condensate in the condenser.

10. A system according to claim 8 or claim 9, wherein the condenser is operated at temperatures below 0° C.

11. A system according to claim 1, wherein the liquid sample is obtained by intermittently melting ice formed in the condenser.

12. A system according to any of claims 1 to 7, wherein the liquid sample is an absorption solution.

13. A system according to claim 12, further comprising a tank (50) for collecting waste absorbent from the system located downstream of the liquid analyser (20) and a source of fresh absorbent, wherein the system is arranged such that, in use, fresh absorbent is fed into the system and waste absorbent is removed from the system, such that the residence time of the absorption solution in the liquid source (10) is controlled.

14. A system according to claim 13, wherein the fresh absorbent comprises an inert internal standard.

15. Use of a system according to any of claims 1 to 14 in a continuous online sample monitoring process.

## Patentansprüche

1. Flüssigkeitsüberführungssystem für die Überführung einer Flüssigkeitsprobe von einer Flüssigkeitsquelle (10) zu einem entfernten Flüssigkeitsprobenanalysator (20), wobei das System eine Kapillare (30) umfasst, die die Flüssigkeitsquelle und den Flüssigkeitsprobenanalysator verbindet, das System derart angeordnet ist, dass bei Verwendung die Flüssigkeit von der Flüssigkeitsquelle zum Flüssigkeitsprobenanalysator über die Kapillare fließt, wobei die Kapillare einen geschlungenen Kreislauf zwischen der Flüssigkeitsquelle und dem Flüssigkeitsprobenanalysator bildet, und das System weiter Mittel zum Pumpen der Flüssigkeitsprobe durch die Kapillare umfasst, wobei das Volumen der Flüssigkeitsprobe, die in die Kapillarleitung überführt wird, im Vergleich zum Volumen der Flüssigkeit in der Flüssigkeitsquelle gering ist.

2. System nach Anspruch 1, wobei Flüssigkeit kontinuierlich von der Flüssigkeitsquelle (10) zum Flüssigkeitsprobenanalysator (20) fließt.

3. System nach einem vorstehenden Anspruch, das weiter ein Gefäß (40) für die Probenahme von Flüssigkeit aus der Kapillare (30) umfasst.

4. System nach Anspruch 3, wobei das Gefäß (40) ein Autoinjektorgefäß ist.

5. System nach Anspruch 3 oder Anspruch 4, wobei das Autoinjektorgefäß (40) eine Durchflusszelle ist.

6. System nach den Ansprüchen 3 bis 5, wobei das Gefäß (40) mit dem Flüssigkeitsprobenanalysator (20) verbunden ist.

7. System nach den Ansprüchen 3 bis 5, wobei das Gefäß (40) mit einem Fraktionssammler verbunden ist.

8. System nach einem vorstehenden Anspruch, wobei die Flüssigkeitsprobe ein Kondensat ist und die Flüssigkeitsquelle (10) ein Kondensator ist.

9. System nach Anspruch 1, (10), das weiter einen Behälter (50) umfasst, der dem Flüssigkeitsprobenanalysator (20) nachgeschaltet lokalisiert ist, wobei das System derart angeordnet ist, dass bei Verwendung überschüssiges Kondensat in dem System zum Behälter überführt wird, wodurch der Füllstand von Kondensat in dem Kondensator geregelt wird.

10. System nach Anspruch 8 oder Anspruch 9, wobei der Kondensator bei Temperaturen unter 0 °C betrieben wird.

11. System nach Anspruch 1, wobei die Flüssigkeitsprobe durch intermittierendes Schmelzen von Eis, das in dem Kondensator gebildet wird, erhalten wird.

12. System nach einem der Ansprüche 1 bis 7, wobei die Flüssigkeitsprobe eine Absorptionslösung ist.

13. System nach Anspruch 12, das weiter einen Behälter (50) für das Sammeln von unbrauchbarem Absorptionsmittel aus dem System, der dem Flüssigkeitsanalysator (20) nachgeschaltet lokalisiert ist, und eine Quelle für frisches Absorptionsmittel umfasst, wobei das System derart angeordnet ist, dass bei Verwendung frisches Absorptionsmittel in das System eingeführt wird und unbrauchbares Absorptionsmittel aus dem System entfernt wird, sodass die Verweilzeit der Absorptionslösung in der Flüssigkeitsquelle (10) geregelt wird.

14. System nach Anspruch 13, wobei das frische Absorptionsmittel einen inerten internen Standard umfasst.

15. Verwendung eines Systems nach einem der Ansprüche 1 bis 14 in einem kontinuierlichen Online-Probenüberwachungsverfahren.

## Revendications

1. Système de transfert de fluide pour le transfert d'un échantillon liquide d'une source de liquide (10) à un analyseur d'échantillon liquide à distance (20), le système comprenant un capillaire (30) reliant la source de liquide à l'analyseur d'échantillon liquide, le système étant agencé de sorte qu'en cours d'usage le liquide s'écoule de la source de liquide à l'analyseur d'échantillon liquide à travers le capillaire, le capillaire formant un circuit en boucle entre la source de liquide et l'analyseur d'échantillon liquide, et le système comprenant en outre un dispositif de pompage de l'échantillon liquide à travers le capillaire, le volume de l'échantillon liquide transféré dans le conduit capillaire étant faible par rapport au volume de liquide dans la source de liquide.

2. Système selon la revendication 1, le liquide s'écoulant en continu de la source de liquide (10) à l'analyseur d'échantillon liquide à distance (20).

3. Système selon une quelconque des revendications précédentes, comprenant en outre un flacon (40) pour l'échantillonnage du liquide provenant du capillaire (30).

4. Système selon la revendication 3, la flacon (40) étant un flacon à auto-injecteur.

5. Système selon la revendication 3 ou la revendication 4, le flacon à auto-injecteur (40) étant une cellule à écoulement continu.

6. Système selon les revendications 3 à 5, le flacon à auto-injecteur (40) étant relié à l'analyseur d'échantillon liquide (20).

7. Système selon les revendications 3 à 5, le flacon à auto-injecteur (40) étant relié à un collecteur de fraction.

8. Système selon une quelconque des revendications précédentes, d'échantillon liquide étant un condensât, et la source de liquide (10) étant un condenseur.

9. Système selon la revendication 1 (10), comprenant en outre une cuve (50) située en aval de l'analyseur d'échantillon liquide à distance (20), le système étant agencé de sorte qu'en cours d'usage, l'excès de condensât dans le système est transféré dans la cuve, en assurant ainsi la régulation du niveau de condensât dans le condenseur.

10. Système selon la revendication 8 ou la revendication 9, le condenseur étant utilisé avec des températures inférieurs à 0°C.

11. Système selon la revendication 1, l'échantillon liquide étant obtenu par la fusion intermittente de la glace se formant dans le condenseur.

12. Système selon une quelconque des revendications 1 à 7, l'échantillon liquide étant une solution d'absorption.

13. Système selon la revendication 12, comprenant en outre une cuve (50) pour la collecte d'absorbant usé du système situé en aval de l'analyseur de liquide (20) et une source d'absorbant frais, le système étant agencé de sorte qu'en cours d'usage de l'absorbant frais est introduit dans le système, et de l'absorbant usé est extrait du système, en assurant ainsi la régulation du temps de permanence de la solution d'absorption dans la source de liquide (10).

14. Système selon la revendication 13, l'absorbant frais comprenant un étalon interne inerte.

15. Utilisation d'un système selon une quelconque des revendications 1 à 14 dans un procédé continu de contrôle de l'échantillon en ligne.
